# EUROPEAN PATENT SPECIFICATION

(11) **EP 3 805 044 B1**
(45) Date of publication and mention of the grant of the patent: **19.07.2023**
(21) Application number: 20195583.8
(22) Date of filing: 10.09.2020
(51) Int. Cl.: B60P 3/40, F16L 1/06

(54) **TRANSPORTER**
TRANSPORTER
TRANSPORTEUR

(30) Priority: 10.09.2019 IT 201900016025
(43) Date of publication of application: 14.04.2021
(73) Proprietor: MDB SRL, 66034 Lanciano (CH) (IT)
(72) Inventor: DI BIASE, Mario, 66034 LANCIANO (CH) (IT)
(74) Representative: Cataldi, Giulia

(56) References cited:
- DE-U- 1 955 724
- DE-U1- 8 804 826
- US-A- 2 333 208
- US-A- 4 286 914
- US-A1- 2015 075 722
- US-A1- 2018 106 056
- US-B1- 8 312 957

## Description

### CROSS-REFERENCE TO RELATED APPLICATIONS

This Patent Application claims priority from Italian Patent Application No. 102019000016025 filed on September 10, 2019.

### TECHNICAL FIELD

The present invention relates to a transporter.

In particular, the present invention relates to a transporter for the manipulation of pipes for oil industry, for example for oil pipelines, gas pipelines or similar.

Pipes for oil industry are understood as bodies substantially with circular section and with relevant dimensions and, advantageously, capable of resisting to high internal pressures. The pipes for oil industry are object of various regulations, for example they are object of regulations EN 10216 and EN 10217. The pipes for oil industry are made of metal, generally steel and must have a minimum thickness capable of ensuring the resistance to the internal pressures, such thickness is given by the regulations of reference. Generally, the pipes for oil industry have a relevant weight, generally defined by the mass per unit length.

Therefore, generally, the pipes for oil industry are bulky and heavy bodies, which require the use of mechanical transporters in order to be moved and installed.

### PRIOR ART

Transporters for the transport of pipes for oil industry are known, for example pipes for oil pipelines or similar. However, the transporters of the known type have a cabin for accommodating an operator during the operation of the transporter itself.

This has the drawback of having to provide for the presence of an operator on board the transporter also during hazardous operations.
Furthermore, transporters that have a limited manoeuvrability are known.

Lastly, transporters comprising coupling systems configured to lift and adhere to pipes for oil industry are known. However, the grasp and transport capacities of the coupling systems of the known type are limited. Furthermore, the transporters of the known type comprise rigid structures, which do not allow ensuring the perfect holding and manipulation of the pipes also in the presence of terrain ruggedness.

US 2018/0106056 A1 and US 8 312 957 B1 each disclose a concrete hose moving device, which can be steered via remote control.

US 4 286 914 A discloses a self-propelled vehicle for laying connecting pipe.

### DESCRIPTION OF THE INVENTION

The object of the present invention is to provide a transporter, which allows ensuring the safety of the operator in any operational configuration.

The object of the present invention is to provide a transporter extremely versatile and capable of manoeuvring, i.e. steering, also in particularly tight spaces.

The object of the present invention is to provide a transporter with a perfected coupling system.

According to the present invention, a transporter as mentioned in the appended claims is provided.

### BRIEF DESCRIPTION OF THE DRAWINGS

The invention will now be described with reference to the attached drawings, which illustrate a non-limiting embodiment thereof:
- Figure 1 shows a schematic and perspective view, with some details removed for clarity, of a transporter according to the present invention during use;

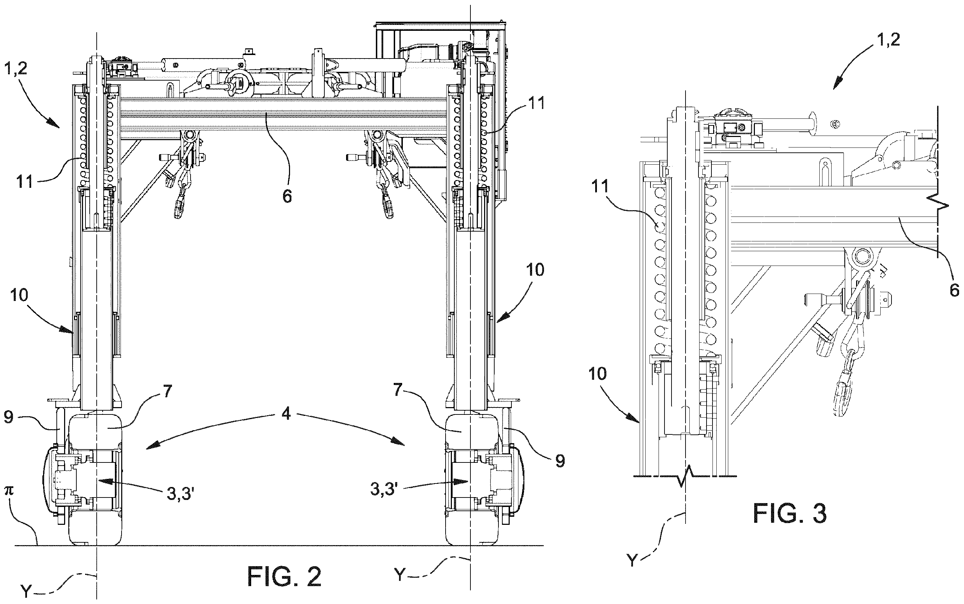

- Figure 2 shows a lateral view of the transporter according to the present invention;
- Figure 3 shows the enlargement of a detail of Figure 2;

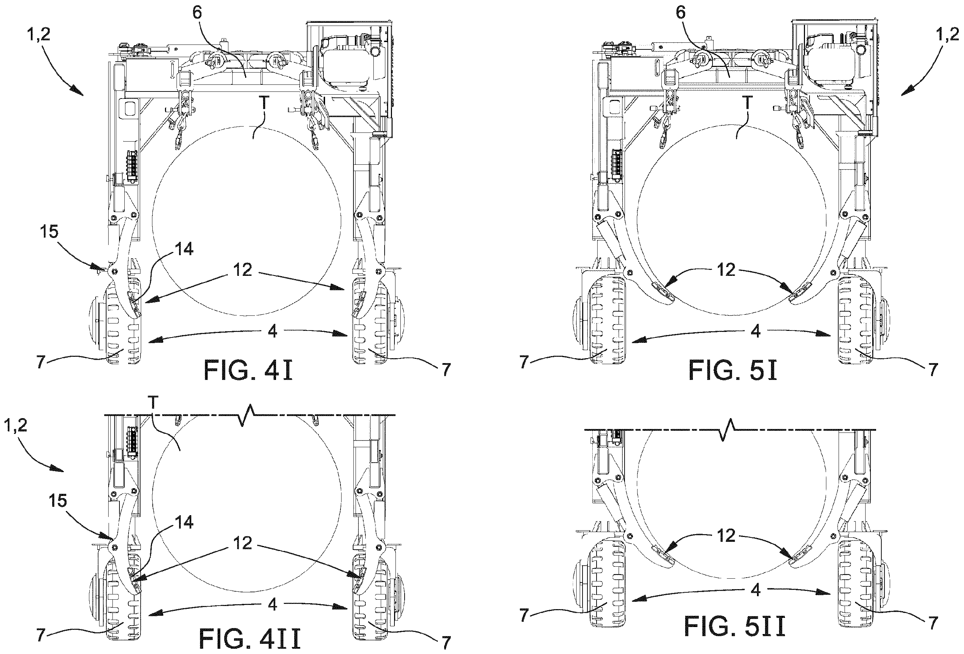

- Figures 4I and 4II show a detail of the transporter according to the present invention in an operational configuration;
- Figures 5I and 5II are similar to Figures 4I and 4II and show a detail of the transporter in a further operational configuration;
- Figures 6 to 12 are bottom views of the transporter according to the present invention in respective different operational configurations.

### PREFERRED EMBODIMENT OF THE INVENTION

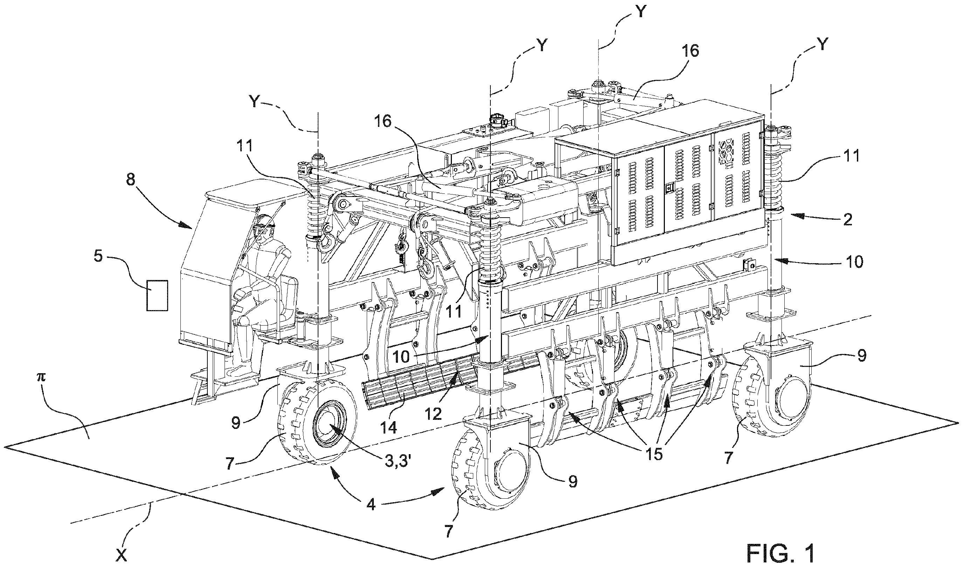

In Figure 1, with reference numeral 1, a transporter for pipes P for oil industry according to the present invention is indicated as a whole. Advantageously, the transporter 1 according to the present invention is radio-controlled.

In particular, the transporter 1 comprises a bearing structure 2, an engine assembly 3, a kinetic unit 4 and a remote control 5 configured to remotely operate said transporter 1. In particular, said remote control 5 operates, in use, the kinetic unit 4 and the bearing structure 2.

The bearing structure 2 is configured to be able to lift and move bodies of large dimensions (i.e. the pipes P for oil industry), preferably the bearing structure 2 is configured to move bodies having a length greater than 10 m and diameters greater than 30 cm.

The bearing structure 2 comprises a chassis 6 having a longitudinal axis Y. The bearing structure 2 is configured to maintain, in use, the chassis 6 substantially parallel to a plane π of support and of forward movement of the transporter 1.

The bearing structure 2 is configured to support the engine assembly 3. Advantageously, the engine assembly 3 comprises a plurality of actuators 3'. According to the illustrated example, the kinetic unit 4 comprises a plurality of wheels 7 and the engine assembly 3 comprises an actuator 3' for one or more wheels 7. Each wheel 7 is operated by a respective actuator 3'.

According to the invention, the transporter 1 comprises, furthermore, a cabin 8 configured to accommodate in use an operator. According to the illustrated example, the cabin 8 protrudes from a front end of the transporter 1. It is highlighted that hereafter the terms such as front, back, upper, inferior or similar are used with reference to the transporter 1 which moves forward on the plane π.

Advantageously, the engine assembly 3 can be operated by means of the remote control 5 and is configured to operate the kinetic unit 4, as better illustrated below.

In particular, each wheel 7 is mounted so as to rotate on a support 9, which is fixed to a respective upright structure 10.

Each upright structure 10 has a longitudinal axis Y, which, in use, is substantially perpendicular to a plane π of support on which the transporter 1 moves.

Each upright structure 10 protrudes inferiorly from the chassis 6. The extension of the upright structure 10 along the longitudinal axis Y is such to allow creating a space below the chassis 6 such to be able to house a pipe P arranged so that its own axis is substantially parallel to the plane π of support.

Advantageously, each upright structure 10 is configured to be able to rotate around its own longitudinal axis Y, preferably 360° in any direction. In this manner, the wheels 7 of the transporter 1 can be angled at pleasure around the longitudinal axis Y of the chassis 6 of the transporter 1.

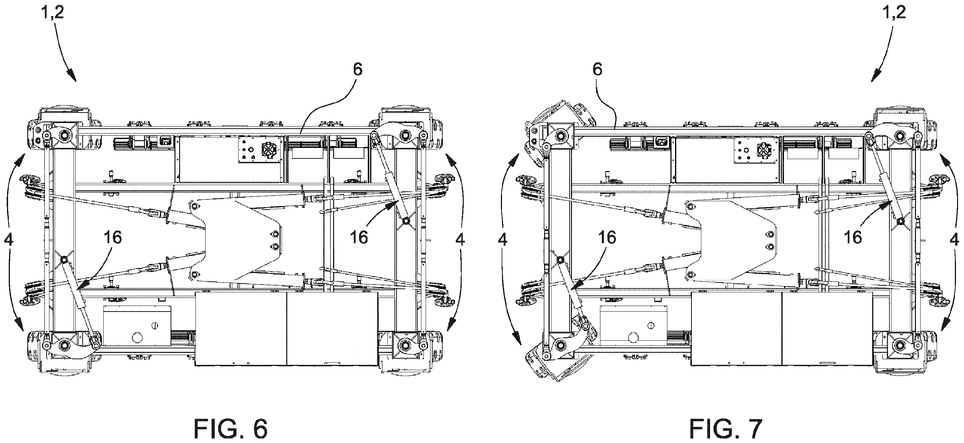

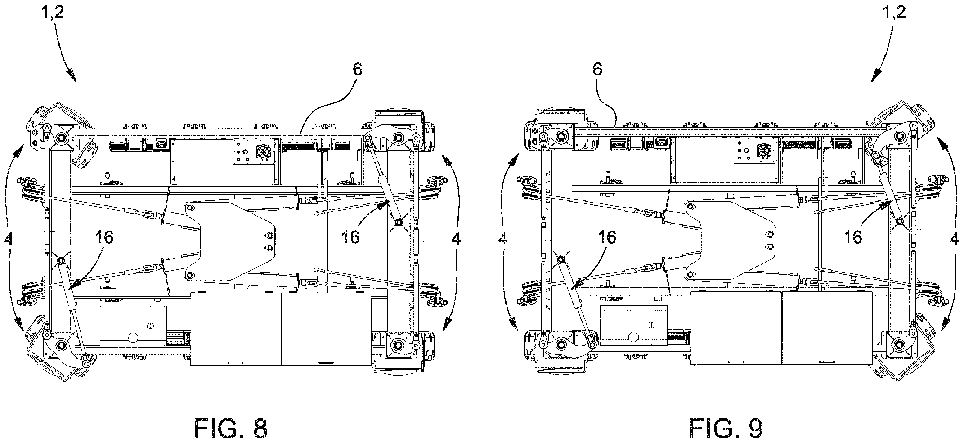

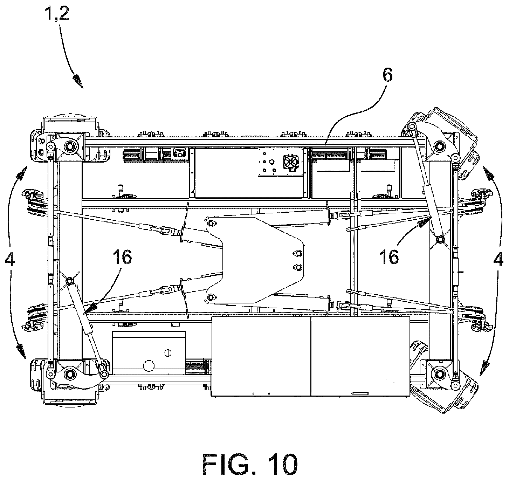

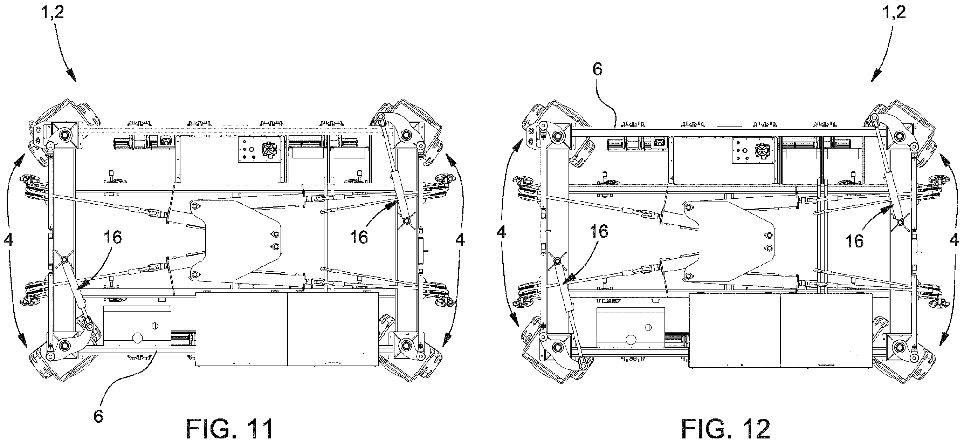

According to the example illustrated in Figures 6 to 12, the kinetic unit 4 comprises a plurality of wheels 7, each of which is a steering wheel, i.e. is integrally rotating around the respective upright structure 10.

Advantageously, the transporter 1 comprises for each upright structure 10 a respective shock absorber system 11. Each shock absorber system 11 is interposed between the respective upright structure 10 and the chassis 6.

According to the example illustrated in the figures, the kinetic unit 4 comprises four wheels 7. More in detail, the kinetic unit 4 comprises two pairs of wheels 7 and respective upright structures 10 parallel to one another. Each pair of wheels 7 and upright structures 10 are connected to one another by a respective axis Z substantially perpendicular to the longitudinal axes Y of each upright structure 10. Advantageously, each pair of wheels 7 can be operated simultaneously, so as to remain always parallel to one another during the use of the transporter 1.

According to the illustrated example, the cabin 8 for the operator is fixed to an upright structure 10 of the transporter 1.

Furthermore, according to what illustrated in the figures, the transporter 1 comprises a coupling system 12 which is configured to adhere to and lift, in use, a pipe P for oil industry. Advantageously, the coupling system 12 comprises a pair of jaws 14 opposite one another. Each jaw 14 can be operated by means of at least one mechanism 15, in particular an articulated quadrilateral, wherein each mechanism 15 can be operated by a radio-controlled actuator, in particular a hydraulic cylinder. According to the illustrated example, given the length of the pipe P for oil industry to be lifted, the transporter 1 comprises a plurality of mechanisms 15 for operating each jaw 14 distributed along a roll axis X substantially parallel to the plane π.

Advantageously, the transporter 1 comprises a steering system 16 which can be operated by means of said remote control 5. According to what illustrated in the figures, the transporter 1 comprises a steering system 16 at the front and a steering system 16 at the back. The steering system 16 at the front is capable of rotating simultaneously both the wheels 7 at the front of the transporter 1. The steering system 16 at the back is capable of rotating simultaneously both the wheels 7 at the back of the transporter 1.

The steering system 16 is capable of rotating each upright structure 10 around its own longitudinal axis Y. In particular, the mechanism 18 is fixed to the chassis 6. Advantageously, the shock absorber system 11 is interposed between the steering system 16 and the respective support 9, in this manner advantageously the shock absorber system 11 allows maintaining the correct centring of the upright structure 10 preventing shifts during the rotation around its own longitudinal axis Y.

Based on what presented above, it follows that the transporter 1 according to the present invention can be remotely controlled without the need for the operator to be on board during potentially hazardous operations. This sensibly increases the safety for the operator.

Furthermore, the presence of the cabin 8, allows the operator to sit and travel firmly to the transporter 1 in a raised position during long routes. This increases the comfort of use for the operator.

Furthermore, the fact of providing for a kinetic unit 4 with the wheels 7 that steer and rotate 360° around an axis perpendicular to the plane π of support, provides the transporter 1 with an extreme versatility and ease of manoeuvre.

In addition to the above, the presence of a shock absorber system 11 for each upright structure 10, allows ensuring the correct functioning of the transporter 1 in any terrain conditions.

Advantageously, the fact that the shock absorber system 11 is interposed between the chassis 6 and the support 9 allows the upright structure 10 to be substantially aligned to its own longitudinal axis Y in any operational and terrain conditions. In this manner, possible malfunctions are prevented.

Furthermore, the particular coupling system 12 allows ensuring the grasp and the correct closing of the jaws 14 on the pipes P thus providing greater safety and holding assurances for the operator.

Therefore, the transporter 1 according to the present invention, unlike the transporters of traditional type, is extremely safe and versatile.

## Claims

1. A radio-controlled transporter (1) for pipes (P) for oil industry, comprising: a bearing structure (2); an engine assembly (3); a kinetic unit (4); and a remote control (5), which remotely operates said transporter (1);
**characterised in that** the transporter (1) further comprises a cabin (8), which is configured to accommodate an operator.

2. A transporter (1) according to claim 1, wherein said engine assembly (3) can be operated by said remote control (5) and is configured to operate said kinetic unit (4) .

3. A transporter (1) according to any one of the preceding claims, wherein said kinetic unit (4) comprises a plurality of wheels (7), each mounted so as to rotate on a support (9) which is fixed to a respective upright structure (10) having a longitudinal axis (Y) substantially perpendicular to a plane (n) of support; wherein the bearing structure (2) comprises a chassis (6) from which the upright structures (10) protrude inferiorly, namely the upright structures (10) are interposed, in use, between the chassis (6) and the plane (n) of support; wherein the transporter (1) comprises a steering system (16) which is configured to rotate a respective upright structure (10) around its own longitudinal axis (Y).

4. A transporter (1) according to Claim 3, wherein each upright structure (10) is configured to make a complete rotation around its own longitudinal axis (Y) in any direction; wherein the steering system (16) is fixed to the chassis (6).

5. A transporter (1) according to Claim 3 or 4 the transporter (1) comprising a shock absorber system (11) for each upright structure (6); said shock absorber system (11) being interposed between the chassis (6) and the respective support (9).

6. A transporter (1) according to any one of the preceding claims, wherein the kinetic unit (4) comprises a plurality of wheels (7), each of which being a steering wheel.

7. A transporter (1) according to any one of the preceding claims and comprising a pair of wheels (7) and respective upright structures (10) parallel to one another, in particular connected to one another by a respective axis substantially perpendicular to the longitudinal axes (Y) of each upright structure (10); wherein each pair of wheels (7) can be operated simultaneously, so as to be always parallel to one another during the use of the transporter (1).

8. A transporter (1) according to any one of the preceding claims and comprising a coupling system (12), which is configured to adhere to and lift, in use, a pipe (P) for oil industry; wherein said coupling system (12) comprises a pair of jaws (14) opposite one another; wherein each jaw (14) can be operated by means of at least one mechanism (15), in particular an articulated quadrilateral, wherein each mechanism (15) can be operated by a radio-controlled actuator, in particular a hydraulic cylinder.

9. A transporter (1) according to Claim 10 and comprising for each jaw (14) a plurality of said at least one mechanisms (15) distributed along a longitudinal axis (X) of the chassis (6) .

## Patentansprüche

1. Funkgesteuerter Transporter (1) für Rohre (P) für die Ölindustrie, aufweisend: eine Tragstruktur (2); eine Motorbaugruppe (3); eine kinetische Einheit (4); und eine Fernbedienung (5), die den Transporter (1) fernbedient,
**dadurch gekennzeichnet, dass** der Transporter (1) ferner eine Kabine (8) aufweist, die für die Unterbringung eines Bedieners ausgelegt ist.

2. Transporter (1) nach Anspruch 1, wobei die Motorbaugruppe (3) durch die Fernbedienung (5) bedienbar ist und ausgelegt ist zum Bedienen der kinetischen Einheit (4).

3. Transporter (1) nach einem der vorstehenden Ansprüche, wobei die kinetische Einheit (4) mehrere Räder (7) aufweist, von denen jedes derart montiert ist, dass es an einem Halter (9) dreht, der an einer jeweiligen Ständerstruktur (10) fixiert ist, die eine Längsachse (Y), im Wesentlichen senkrecht zu einer Abstützebene (π), hat; wobei die Tragstruktur (2) ein Fahrwerk (6) aufweist, von dem die Ständerstrukturen (10) nieder vorstehen, nämlich die Ständerstrukturen (10) sind im Gebrauch zwischen dem Fahrwerk (6) und der Abstützebene (π) angeordnet; wobei der Transporter (1) ein Lenksystem (16) aufweist, das ausgestaltet ist, um eine jeweilige Ständerstruktur (10) um ihre eigene Längsachse (Y) zu drehen.

4. Transporter (1) nach Anspruch 3, wobei jede Ständerstruktur (10) ausgelegt ist, um eine komplette Drehung um ihre eigene Längsachse (Y) in jegliche Richtung vorzunehmen; wobei das Lenksystem (16) an dem Fahrwerk (6) befestigt ist.

5. Transporter (1) nach Anspruch 3 oder 4, wobei der Transporter (1) ein Stoßdämpfersystem (11) für jede Ständerstruktur (6) aufweist; wobei das Stoßdämpfersystem (11) zwischen dem Fahrwerk (6) und dem jeweiligen Halter (9) angeordnet ist.

6. Transporter (1) nach einem der vorstehenden Ansprüche, wobei die kinetische Einheit (4) mehrere Räder (7) umfasst, von denen jedes ein Lenkrad ist.

7. Transporter (1) nach einem der vorstehenden Ansprüche und aufweisend ein Paar Räder (7) und jeweilige Ständerstrukturen (10), parallel zueinander und insbesondere miteinander verbunden über jeweilige Achsen, die im Wesentlichen senkrecht zu den Längsachsen (Y) jeder Ständerstruktur (10) sind; wobei jedes Paar Räder (7) gleichzeitig betätigt werden kann, um immer parallel zueinander während des Gebrauchs des Transporters (1) zu sein.

8. Transporter (1) nach einem der vorstehenden Ansprüche und mit einem Kopplungssystem (12), das ausgelegt ist, um im Gebrauch ein Rohr (P) für die Ölindustrie festzuhalten und anzuheben; wobei das Kopplungssystem (12) ein Paar gegenüberliegender Backen (14) aufweist; wobei jede Backe (14) betätigbar ist mit Hilfe wenigstens eines Mechanismus (15), insbesondere eines frei beweglichen Vierseits, wobei jeder Mechanismus (15) betätigbar ist über einen funkgesteuerten Aktuator, insbesondere einen Hydraulikzylinder.

9. Transporter (1) nach Anspruch 10 und für jede Backe (14) aufweisend mehrere der wenigstens einen Mechanismen (15), verteilt entlang einer Längsachse (X) des Fahrwerks (6).

## Revendications

1. Transporteur radiocommandé (1) pour les tuyaux (P) pour l'industrie pétrolière, comprenant : une structure de support (2) ; un assemblage de moteur (3) ; une unité cinétique (4) ; et une télécommande (5) qui fait fonctionner à distance ledit transporteur (1) ; **caractérisé en ce que** le transporteur (1) comprend en outre une cabine (8) qui est configurée pour loger un opérateur.

2. Transporteur (1) selon la revendication 1, dans lequel ledit assemblage de moteur (3) peut être actionné au moyen de ladite télécommande (5) et est configuré pour faire fonctionner ladite unité cinétique (4).

3. Transporteur (1) selon l'une quelconque des revendications précédentes, dans lequel ladite unité cinétique (4) comprend une pluralité de roues (7) dont chacune est montée de manière à être entraînée en rotation sur un support (9) qui est fixé à une structure verticale respective (10) qui comporte un axe longitudinal (Y) sensiblement perpendiculaire à un plan (π) de support ; dans lequel la structure de support (2) comprend un châssis (6) depuis lequel les structures verticales (10) sont étendues de façon inférieure, c'est-à-dire que les structures verticales (10) sont interposées, en utilisation, entre le châssis (6) et le plan (π) de support ; et dans lequel le transporteur (1) comprend un système de direction (16) qui est configuré pour entraîner en rotation une structure verticale respective (10) autour de son propre axe longitudinal (Y).

4. Transporteur (1) selon la revendication 3, dans lequel chaque structure verticale (10) est configurée pour effectuer une rotation complète autour de son propre axe longitudinal (Y) dans n'importe quelle direction ; et dans lequel le système de direction (16) est fixé au châssis (6).

5. Transporteur (1) selon la revendication 3 ou 4, le transporteur (1) comprenant un système absorbeur de chocs (11) pour chaque structure verticale (6) ; et ledit système absorbeur de chocs (11) étant interposé entre le châssis (6) et le support respectif (9).

6. Transporteur (1) selon l'une quelconque des revendications précédentes, dans lequel l'unité cinétique (4) comprend une pluralité de roues (7) dont chacune est une roue de direction.

7. Transporteur (1) selon l'une quelconque des revendications précédentes et comprenant une paire de roues (7) et des structures verticales respectives (10) parallèles l'une à l'autre/les unes aux autres, en particulier connectées l'une à l'autre/les unes aux autres par un axe respectif sensiblement perpendiculaire aux axes longitudinaux (Y) de chaque structure verticale (10) ; dans lequel chaque paire de roues (7) peut être actionnée simultanément de manière à ce qu'elles soient toujours parallèles l'une à l'autre/les unes aux autres pendant l'utilisation du transporteur (1).

8. Transporteur (1) selon l'une quelconque des revendications précédentes et comprenant un système de couplage (12) qui est configuré pour, en utilisation, être appliqué sur un tuyau (P) pour l'industrie pétrolière et pour le soulever ; dans lequel ledit système de couplage (12) comprend une paire de mâchoires (14) opposées l'une à l'autre ; et dans lequel chaque mâchoire (14) peut être actionnée au moyen d'au moins un mécanisme (15), en particulier un quadrilatère articulé, et dans lequel chaque mécanisme (15) peut être actionné par un actionneur radiocommandé, en particulier un vérin hydraulique.

9. Transporteur (1) selon la revendication 10 et comprenant, pour chaque mâchoire (14), une pluralité desdits au moins un mécanisme (15) qui sont distribués suivant un axe longitudinal (X) du châssis (6).
